(19) Europäisches Patentamt
European Patent Office
Office européen des brevets

(11) Publication number : 0 514 270 A1

(12) **EUROPEAN PATENT APPLICATION**

(21) Application number : 92401321.2

(22) Date of filing : 14.05.92

(51) Int. Cl.$^5$ : C07F 7/12, C07F 7/14, C07F 7/08

(30) Priority : 15.05.91 JP 139608/91

(43) Date of publication of application : 19.11.92 Bulletin 92/47

(84) Designated Contracting States : DE FR GB

(71) Applicant : SHIN-ETSU CHEMICAL CO., LTD.
6-1, Ohtemachi 2-chome
Chiyoda-ku Tokyo (JP)

(72) Inventor : Takago, Toshio
94-7 Yanase
Annaka-shi, Gunma-ken (JP)
Inventor : Kishita, Hirofumi
3-19-1-402, Isobe
Annaka-shi, Gunma-ken (JP)
Inventor : Sato, Shin-ichi
3-5-5, Isobe
Annaka-shi, Gunma-ken (JP)
Inventor : Kinami, Hitoshi
4-10-25, Isobe
Annaka-shi, Gunma-ken (JP)
Inventor : Koike, Noriyuki
608-1-21, Yoshii, Yoshii-machi
Tano-gun, Gunma-ken (JP)
Inventor : Matsuda, Takashi
A-505,791-4, Yanase Annaka-shi
Gunma-ken (JP)

(74) Representative : Armengaud, Alain et al
Cabinet ARMENGAUD AINE 3, Avenue Bugeaud
F-75116 Paris (FR)

(54) **Novel organosilicon compound.**

(57) A novel silicon-containing fluorinated polyoxyalkylene compound is disclosed which is represented by the general formula

$$Z\text{-}SiR_2\text{-}CH_2\text{-}CH_2\text{-}Rf\text{-}CH_2\text{-}CH_2\text{-}SiR_2\text{-}Z,$$

in which R is an alkyl group, e.g., methyl group, Z is an atom of halogen, e.g., chlorine, or a hydroxy group and Rf is a divalent fluorinated polyoxyalkylene group represented by the general formula

$$\text{-[-CF(CF}_3\text{)-O-]}_p\text{-[-CF}_2\text{-CF(CF}_3\text{)-O-]}_r\text{-[-CF}_2\text{]}_t\text{-}$$
$$\text{-[-O-CF(CF}_3\text{)-CF}_2\text{-]}_s\text{-[-O-CF(CF}_3\text{)-]}_q\text{-},$$

p and q each being simultaneously zero or 1, r and s each being a positive integer of from 1 to 4 and t being a positive integer of from 2 to 8.

EP 0 514 270 A1

## BACKGOUND OF THE INVENTION

The present invention relates to a novel organosilicon compound not known in the prior art nor described in any literatures. More particularly, the invention relates to a novel silicon-containing fluorinated polyoxyalkylene compound useful as a material of rubbers highly resistant against solvents and chemicals and as an ingredient in surface-releasing agents.

## SUMMARY OF THE INVENTION

The novel fluorine-containing organosilicon compound is a silicon-containing fluorinated polyoxyalkylene compound represented by the general formula

$$Z\text{-}SiR_2\text{-}CH_2\text{-}CH_2\text{-}Rf\text{-}CH_2\text{-}CH_2\text{-}SiR_2\text{-}Z, \qquad (I)$$

in which R is an alkyl group, e.g., methyl group, Z is an atom of halogen, e.g., chlorine, or a hydroxy group and Rf is a divalent fluorinated polyoxyalkylene group represented by the general formula

$$\text{-[-CF(CF}_3\text{)-O-]}_p\text{-[-CF}_2\text{-CF(CF}_3\text{)-O-]}_r\text{-[-CF}_2\text{]}_t\text{-}$$
$$\text{-[-O-CF(CF}_3\text{)-CF}_2\text{-]}_s\text{-[-O-CF(CF}_3\text{)-]}_q\text{-,} \quad \cdots\cdots \quad (II)$$

p and q each being simultaneously zero or 1, r and s each being a positive integer of from 1 to 4 and t being a positive integer of from 2 to 8.

## BRIEF DESCRIPTION OF THE DRAWING

Figures 1 and 2 are each an infrared absorption spectrum of the compound obtained in Example 1 and Example 2, respectively.

## DETAILED DESCRIPTION OF THE PREFERRED EMBODIMENTS

As is described above, the novel organosilicon compound of the invention is a fluorinated polyoxyalkylene compound terminated at each molecular end with a 2-(dialkyl halogeno silyl)ethyl or 2-(dialkyl hydroxy silyl)ethyl group as represented by the general formula (I) given above, in which Rf is a divalent polyoxyalkylene group represented by the general formula (II). In the general formulas (I) and (II), R is an alkyl group, e.g., methyl group, Z is an atom of halogen, e.g., chlorine, or a hydroxy group and the subscripts p, q, r, s and t are each zero or a positive integer defined above.

Examples of the inventive novel compound in conformity with the above given definition include those expressed by the following structural formulas, in which Me is a methyl group:

$$\text{Cl-SiMe}_2\text{-CH}_2\text{-CH}_2\text{-CF(CF}_3\text{)-O-CF}_2\text{-CF(CF}_3\text{)-O-(-CF}_2\text{-)}_2\text{-}$$
$$\text{-O-CF(CF}_3\text{)-CF}_2\text{-O-CF(CF}_3\text{)-CH}_2\text{-CH}_2\text{-SiMe}_2\text{-Cl;}$$

$$\text{Cl-SiMe}_2\text{-CH}_2\text{-CH}_2\text{-CF(CF}_3\text{)-O-[-CF}_2\text{-CF(CF}_3\text{)-O-]}_2\text{-(-CF}_2\text{-)}_2\text{-}$$
$$\text{-O-CF(CF}_3\text{)-CF}_2\text{-O-CF(CF}_3\text{)-CH}_2\text{-CH}_2\text{-SiMe}_2\text{-Cl;}$$

$$\text{Cl-SiMe}_2\text{-CH}_2\text{-CH}_2\text{-CF(CF}_3\text{)-O-CF}_2\text{-CF(CF}_3\text{)-O-(-CF}_2\text{-)}_4\text{-}$$
$$\text{-O-CF(CF}_3\text{)-CF}_2\text{-O-CF(CF}_3\text{)-CH}_2\text{-CH}_2\text{-SiMe}_2\text{-Cl;}$$

$$\text{Cl-SiMe}_2\text{-CH}_2\text{-CH}_2\text{-[-CF}_2\text{-CF(CF}_3\text{)-O-]}_2\text{-(-CF}_2\text{-)}_2\text{-}$$
$$\text{-O-CF(CF}_3\text{)-CF}_2\text{-CH}_2\text{-CH}_2\text{-SiMe}_2\text{-Cl;}$$

$$HO\text{-}SiMe_2\text{-}CH_2\text{-}CH_2\text{-}CF(CF_3)\text{-}O\text{-}CF_2\text{-}CF(CF_3)\text{-}O\text{-}(\text{-}CF_2\text{-})_2\text{-}$$
$$\text{-}O\text{-}CF(CF_3)\text{-}CF_2\text{-}O\text{-}CF(CF_3)\text{-}CH_2\text{-}CH_2\text{-}SiMe_2\text{-}OH;$$

$$HO\text{-}SiMe_2\text{-}CH_2\text{-}CH_2\text{-}CF(CF_3)\text{-}O\text{-}[\text{-}CF_2\text{-}CF(CF_3)\text{-}O\text{-}]_2\text{-}(\text{-}CF_2\text{-})_2\text{-}$$
$$\text{-}O\text{-}CF(CF_3)\text{-}CF_2\text{-}O\text{-}CF(CF_3)\text{-}CH_2\text{-}CH_2\text{-}SiMe_2\text{-}OH;$$

$$HO\text{-}SiMe_2\text{-}CH_2\text{-}CH_2\text{-}CF(CF_3)\text{-}O\text{-}CF_2\text{-}CF(CF_3)\text{-}O\text{-}(\text{-}CF2\text{-})_4\text{-}$$
$$\text{-}O\text{-}CF(CF_3)\text{-}CF_2\text{-}O\text{-}CF(CF_3)\text{-}CH_2\text{-}CH_2\text{-}SiMe_2\text{-}OH; \text{ and}$$

$$HO\text{-}SiMe_2\text{-}CH_2\text{-}CH_2\text{-}[\text{-}CF_2\text{-}CF(CF_3)\text{-}O\text{-}]_2\text{-}(\text{-}CF_2\text{-})_2\text{-}$$
$$\text{-}O\text{-}CF(CF_3)\text{-}CF_2\text{-}CH_2\text{-}CH_2\text{-}SiMe_2\text{-}OH.$$

Following is an outline of the process for the preparation of the inventive compound of which the terminal silicon atoms each have an atom of halogen bonded thereto. The inventive compound of which the terminal silicon atoms each have a hydroxy group can be derived from the corresponding compound of the former type.

Thus, an $\alpha,\omega$-divinyl perfluoropolyether compound, which is a known compound reported by O.R. Pierce and Y.K. Kim in Applied Polymer Symposium, volume 22, pages 103-125 (1973), represented by the general formula

$$CH_2 = CH\text{-}Rf\text{-}CH = CH_2,$$

or, namely,

$$CH_2{=}CH\text{-}[\text{-}CF(CF_3)\text{-}O\text{-}]_p\text{-}[\text{-}CF_2\text{-}CF(CF_3)\text{-}O\text{-}]_r\text{-}$$
$$\text{-}[\text{-}CF_2]_t\text{-}[\text{-}O\text{-}CF(CF_3)\text{-}CF_2\text{-}]_s\text{-}[\text{-}O\text{-}CF(CF_3)\text{-}]_q\text{-}CH{=}CH_2,$$

in which each subscript has the same meaning as defined above, is subjected to the addition reaction of so-called hydrosilation with a dialkyl monohalogeno silane such as dimethyl chlorosilane in the presence of a catalyst at a temperature in the range from 60 to 150 °C or, preferably, from 80 to 120 °C. The compounds having catalytic activity for this reaction are well known in the art including compounds of the platinum-group metals such as platinum, palladium and rhodium. Suitable catalytic compounds include chloroplatinic acid , alcohol-modified chloroplatinic acid disclosed in U.S. Patent No. 3,220,972, complexes of chloroplatinic acid with olefins disclosed in U.S. Patents No. 3,159,601, No. 3,159,662 and No. 3,775,452, similar olefin complexes of rhodium, tris(triphenyl phosphine) rhodium chloride, i.e. the Wilkinson catalyst, and the like. These platinum-group metals are effective even in their elementary form when the metal is finely divided and supported on a suitable carrier such as silica, alumina, active carbon and the like. These catalysts are used in the form of a solution or in the form of a dispersion in an organic solvent such as alcohols, ketones, ethers and hydrocarbons.

The inventive organosilicon compound of which each of the silicon atoms has a hydroxy group bonded thereto can be obtained by the hydrolysis of the halogen-terminated compound obtained in the above described manner under a neutral condition at a temperature not higher than 20 °C or, preferably, in the range, from 0 to 10 °C in the presence of an acid acceptor such as sodium hydrogencarbonate and the like.

The novel compound of the present invention prepared in the above described manner can be used in a variety of applications. For example, a fluorinated polyoxyalkylene compound having siloxane linkages in the molecular chain can be obtained by the dehydration condensation reaction between the silanolic hydroxy groups at the molecular ends of the inventive compound of which the group denoted by Z in the general formula (I) is a hydroxy group. Such a polymer contains fluorine in a high content so that it is useful as a material for the preparation of a rubber composition capable of giving a vulcanized rubber article having high resistance against solvents and chemicals. Such a high-fluorine polymer is also useful as an ingredient in a surface releasing agent by virtue of the very low surface energy thereof.

In the following, examples are given to illustrate the preparation procedure and characterization of the inventive compound in more detail.

Example 1.

Into an autoclave of 1 liter capacity equipped with a stirrer and thermometer were introduced 600 g of an α,ω-divinyl perfluoro polyether expressed by the formula

$$CH_2=CH\text{-}CF(CF_3)\text{-}O\text{-}[\text{-}CF_2\text{-}CF(CF_3)\text{-}O\text{-}]_2\text{-}$$
$$\text{-}[\text{-}CF_2]_2\text{-}O\text{-}CF(CF_3)\text{-}CF_2\text{-}O\text{-}CF(CF_3)\text{-}CH=CH_2,$$

0.32 g of tris(triphenyl phosphine) rhodium chloride and 154.0 g of dimethyl chlorosilane to form a reaction mixture which was agitated at 90 °C for 16 hours to effect the reaction. After completion of the reaction, the reaction mixture taken out of the autoclave was subjected to distillation under reduced pressure to give 528.4 g of a fraction boiling at 126 °C under a pressure of 0.5 mmHg and having a refractive index of 1.344 at 25 °C. This compound could be identified to be a compound expresed by the formula

$$Cl\text{-}SiMe_2\text{-}CH_2\text{-}CH_2\text{-}CF(CF_3)\text{-}O\text{-}[\text{-}CF_2\text{-}CF(CF_3)\text{-}O\text{-}]_2\text{-}(CF_2)_2\text{-}$$
$$\text{-}O\text{-}CF(CF_3)\text{-}CF_2\text{-}O\text{-}CF(CF_3)\text{-}CH_2\text{-}CH_2\text{-}SiMe_2\text{-}Cl$$

from the analytical results shown below obtained by the infrared absorption spectrophotometry, $^1$H-NMR analysis, $^{19}$F-NMR analysis and elementary analysis.

Infrared absorption spectrophotometry:

See Figure 1 of the accompanying drawing for the spectrum.

1100 - 1300 $cm^{-1}$ : C-F

$^1$H-NMR analysis:

δ 0.43 (s, Si-$CH_3$, 12H)

δ 0.93 (m, Si-$CH_2$, 4H)

δ 2.23 (m, CF-$CH_2$, 4H)

$^{19}$NMR analysis ($CF_3COOH$ as the internal standard):

$$\underset{d}{CF}(\underset{a}{CF_3})\text{-}O\text{-}[\text{-}\underset{b}{CF_2}\text{-}\underset{e}{CF}(\underset{a}{CF_3})\text{-}O\text{-}]_x\text{-}\underset{c}{CF_2}\text{-}\underset{c}{CF_2}$$

a : -3.16 ppm

b : -5.89 ppm

c : -8.87 ppm

d : -51.71 ppm

e : -67.29 ppm

Elementary analysis:

| | C | H | Si | F | Cl |
|---|---|---|---|---|---|
| Calculated, %, for $C_{23}H_{20}O_5Si_2F_{30}Cl_2$ | 26.6 | 1.9 | 5.2 | 52.6 | 6.5 |
| Found, % | 26.8 | 1.9 | 5.1 | 52.7 | 6.5 |

Example 2.

Into a four-necked flask of 10 liter capacity equipped with a reflux condenser, stirrer, thermometer and dropping funnel were intro-duced 500 g of sodium hydrogencarbonate, 2000 g of diethyl ether and 3000 g of water to form a mixture into which 1600 g of the compound prepared by repeating the procedure described in Example 1 were added dropwise through the dropping funnel equipped to the flask while the mixture was kept at 10 °C under agitation over a period of 2 hours.

After completion of the dropwise addition of the starting compound, the reaction mixture was further agitated for 2 hours at the same temperature, the reaction mixture was subjected to phase separation and the organic solution was washed twice with a 10% aqueous solution of sodium chloride and then freed from diethyl ether by distillation and filtrated to give a viscous liquid product having a refractive index of 1.343 at 25 °C and a viscosity of 1048 centistokes at 25 °C. The analytical results shown below supported that this product could be expressed by the formula

$$HO\text{-}SiMe_2\text{-}CH_2\text{-}CH_2\text{-}CF(CF_3)\text{-}O\text{-}[\text{-}CF_2\text{-}CF(CF_3)\text{-}O\text{-}]_2\text{-}(CF_2)_2\text{-}$$

$$\text{-}O\text{-}CF(CF_3)\text{-}CF_2\text{-}O\text{-}CF(CF_3)\text{-}CH_2\text{-}CH_2\text{-}SiMe_2\text{-}OH.$$

Infrared absorption spectrophotometry:

See Figure 2 of the accompanying drawing for the spectrum.

1100 - 1300 $cm^{-1}$ : C-F

3300 $cm^{-1}$ : Si-OH

$^1H$-NMR analysis:

δ 0.20 (s, $Si\text{-}CH_3$, 12H)

δ 0.86 (m, $Si\text{-}CH_2$, 4H)

δ 2.26 (m, $CF\text{-}CH_2$, 4H)

δ 3.33 (m, Si-OH 2H)

$^{19}F$-NMR analysis ($CF_3COOH$ as the internal standard):

$$CF(CF_3)\text{-}O\text{-}[\text{-}CF_2\text{-}CF(CF_3)\text{-}O\text{-}]_x\text{-}CF_2\text{-}CF_2$$

d a b e a c c

(x = 1 or 2)

a : -3.11 ppm

b : -5.75 ppm

c : -8.68 ppm

d : -51.41 ppm

e : -67.09 ppm

Elementary analysis:

| | C | H | Si | F | O |
|---|---|---|---|---|---|
| Calculated, %, for $C_{23}H_{22}O_7Si_2F_{30}$ | 27.5 | 2.1 | 5.4 | 54.4 | 10.7 |
| Found, % | 27.6 | 2.0 | 5.4 | 54.6 | 10.8 |

## Claims

1. A silicon-containing fluorinated polyoxyalkylene compound represented by the general formula

$$Z\text{-}SiR_2\text{-}CH_2\text{-}CH_2\text{-}Rf\text{-}CH_2\text{-}CH_2\text{-}SiR_2\text{-}Z,$$

in which R is an alkyl group, Z is an atom of halogen or a hydroxy group and Rf is a divalent fluorinated polyoxyalkylene group represented by the general for-mula

$$\text{-}[\text{-}CF(CF_3)\text{-}O\text{-}]_p\text{-}[\text{-}CF_2\text{-}CF(CF_3)\text{-}O\text{-}]_r\text{-}[\text{-}CF_2]_t\text{-}$$

$$\text{-}[\text{-}O\text{-}CF(CF_3)\text{-}CF_2\text{-}]_s\text{-}[\text{-}O\text{-}CF(CF_3)\text{-}]_q\text{-},$$

p and q each being simultaneously zero or 1, r and s each being a positive integer of from 1 to 4 and t being a positive integer of from 2 to 8.

2. The silicon-containing fluorinated polyoxyalkylene compound as claimed in claim 1 in which R is a methyl group.

3. The silicon-containing fluorinated polyoxyalkylene compound as claimed in claim 1 in which the atom of halogen denoted by Z is an atom of chlorine.

FIG. I

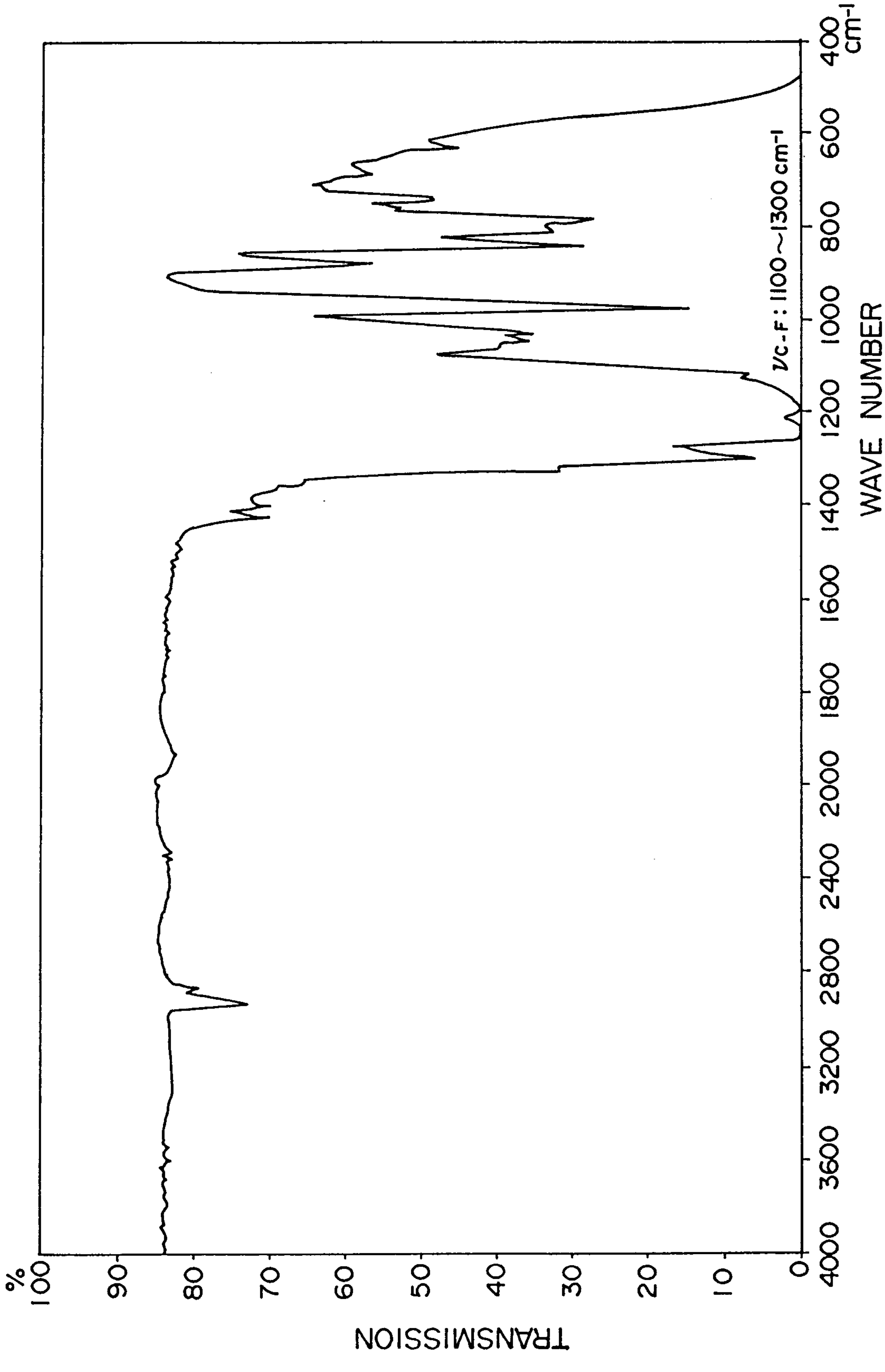
%
100
90
80
70
60
50
40
30
20
10
0
TRANSMISSION
4000
3600
3200
2800
2400
2000
1800
1600
1400
1200
1000
800
600
400
cm-1
WAVE NUMBER
νC-F : 1100~1300 cm-1

FIG. 2

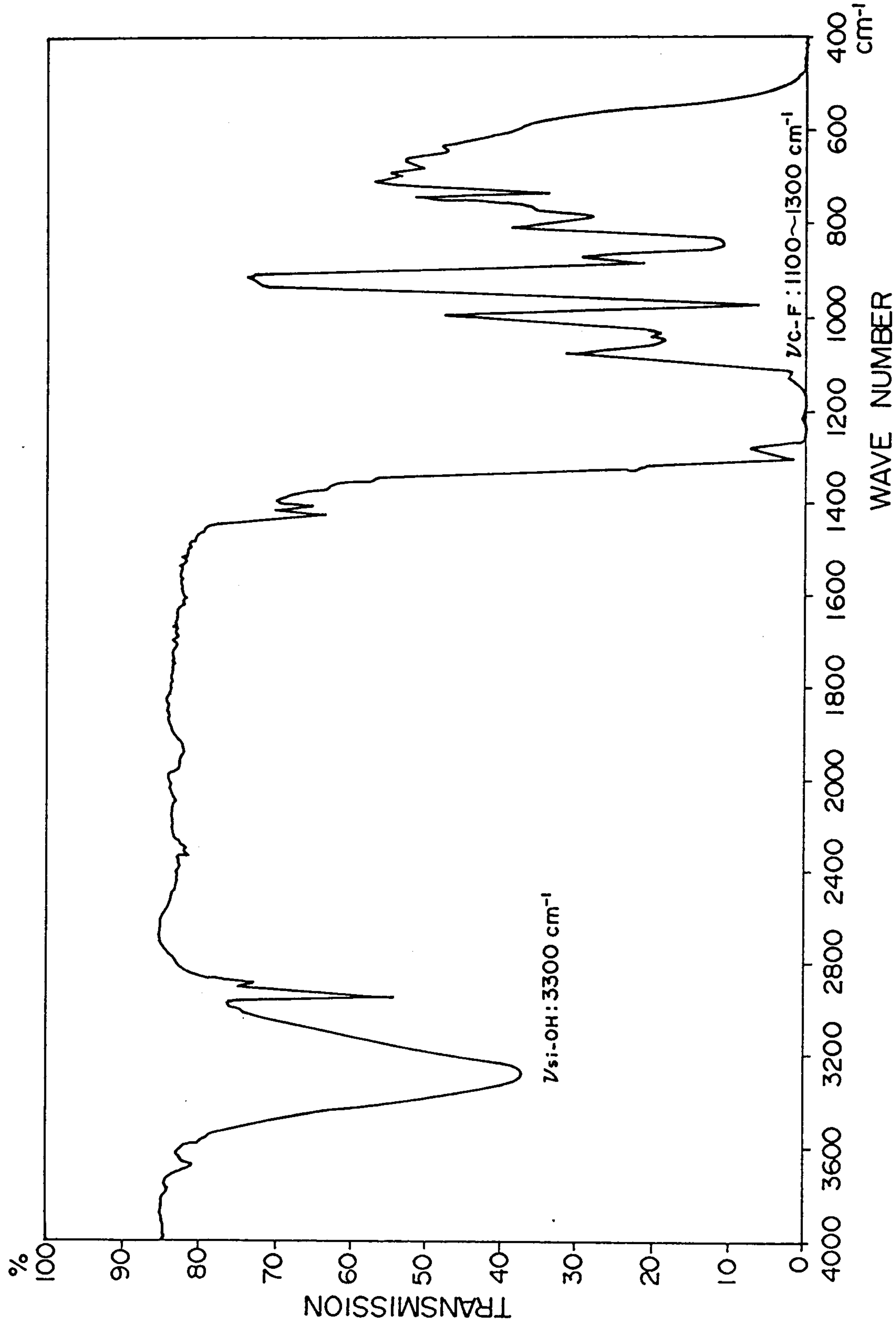
%
TRANSMISSION
100
90
80
70
60
50
40
30
20
10
0
4000
3600
3200
2800
2400
2000
1800
1600
1400
1200
1000
800
600
400
$cm^{-1}$
WAVE NUMBER
$\nu_{Si-OH}$: 3300 $cm^{-1}$
$\nu_{C-F}$: 1100~1300 $cm^{-1}$

European Patent Office

# EUROPEAN SEARCH REPORT

Application Number

EP 92 40 1321

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 112, 1990, Columbus, Ohio, US; abstract no. 218903Z, IZEKI, Y. ET AL.: 'FLUORINE-CONTAINING SILYL COMPOUNDS FOR POLYMERS' page 106 ; * abstract * & JP-A-01 211 593 (TOKUYAMA SODA CO., LTD.) | 1-3 | C07F7/12<br>C07F7/14<br>C07F7/08 |
| A | CHEMICAL ABSTRACTS, vol. 112, 1990, Columbus, Ohio, US; abstract no. 157678F, IZEKI, Y. ET AL.: 'FLUORINE-CONTAINING ETHERS AS CROSS-LINKING AGENTS AND MONOMERS' page 667 ; * abstract * & JP-A-01 226 844 (TOKUYAMA SODA CO., LTD.) | 1-3 | |
| A | FR-A-2 337 731 (DOW CORNING CORPORATION) * the whole document * | 1-3 | |

TECHNICAL FIELDS SEARCHED (Int. Cl.5)

C07F

The present search report has been drawn up for all claims

| Place of search | Date of completion of the search | Examiner |
|---|---|---|
| THE HAGUE | 23 JULY 1992 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)